# EUROPÄISCHE PATENTSCHRIFT

(11) **EP 3 461 312 B1**
(45) Veröffentlichungstag und Bekanntmachung des Hinweises auf die Patenterteilung: **09.12.2020**
(21) Anmeldenummer: 18401079.1
(22) Anmeldetag: 28.08.2018
(51) Int. Cl.: A01B 59/042, A01B 51/04, B62D 49/06

(54) **ANHÄNGESYSTEM FÜR EIN GEZOGENES LANDWIRTSCHAFTLICHES GERÄT**
TOWING SYSTEM FOR A TOWED AGRICULTURAL IMPLEMENT
SYSTÈME D'ATTELAGE POUR UN APPAREIL AGRICOLE TRACTÉ

(30) Priorität: 11.09.2017 DE 102017120869
(43) Veröffentlichungstag der Anmeldung: 03.04.2019
(73) Patentinhaber: Amazonen-Werke H. Dreyer GmbH & Co. KG, 49205 Hasbergen (DE)
(72) Erfinder: Scherf, Silvio, 39444 Hecklingen OT Cochstedt (DE); Wolfrum, Thomas, 04229 Leipzig (DE)

(56) Entgegenhaltungen:
- EP-A2- 1 021 943
- CN-U- 203 537 775
- US-B1- 6 238 170

## Beschreibung

Die Erfindung betrifft ein Anhängesystem für ein gezogenes landwirtschaftliches Gerät gemäß dem Oberbegriff des Patentanspruches 1.

Ein derartiges Anhängesystem ist in US 6 238 170 B1 beschrieben.
Ein weiteres Anhängesystem für ein gezogenes landwirtschaftliches Gerät ist in US 2017/0231147 A1 beschrieben.

Das Anhängesystem weist einen Fahrwerksrahmen auf, an dem im Wesentlichen eine Deichsel mit Zugkupplung, eine Dreipunktkupplungsvorrichtung und ein einachsiges Fahrwerk angeordnet sind. Die Deichsel erstreckt sich in Fahrtrichtung nach vorn und ist an seinem vorderen Ende mit der Zugkupplung versehen, um das Anhängesystem an eine Zugmaschine anzukuppeln. Auf der Oberseite der Deichsel sind Hydraulikleitungen angeordnet, die dazu eingerichtet sind, die an dem Fahrwerksrahmen befindliche Hydraulikaktoren mit dem Hydrauliksystem der Zugmaschine zu verbinden.
In Fahrtrichtung hinter der Deichsel ist das Fahrwerk, mit dessen Hilfe das Anhängesystem sich auf dem Boden abstützt, am Fahrwerksrahmen angeordnet. Die Achse der beiden Laufräder ist starr und erstreckt sich quer zur Fahrtrichtung.
Die Dreipunktkupplungsvorrichtung befindet sich, auf die Fahrtrichtung bezogen, an der Rückseite des Fahrwerkrahmens. Die Dreipunktkupplungsvorrichtung ist mit Hilfe eines Koppelbalkensystems und Hydraulikaktoren höhenverstellbar am Fahrwerksrahmen befestigt. Das Koppelbalkensystem besteht im Wesentlichen aus zwei oberen und zwei unteren Koppelbalken, die über Verstellspindeln verbunden sind. Zusätzlich sind dem Koppelbalkensystem zwei aufrechte Aktoren zugeordnet.
Sämtliche Balken sind an ihrem in Fahrtrichtung vorderen freien Ende mittels Gelenkachsen am Fahrwerksrahmen drehbar festgelegt. Das hintere freie Ende der unteren Koppelbalken ist mittels einer Bolzensteckverbindung den Unterlenkerfanghaken der Dreipunktkupplungsvorrichtung zugeordnet. So können sich die Unterlenkerfanghaken gegenüber den unteren Koppelbalken verdrehen. Der Oberlenkerfanghaken der Dreipunktkupplungsvorrichtung wird mit Hilfe eines Verbindungsstücks in axialer Richtung am Fahrwerksrahmen festgelegt. Die Dreipunktkupplungsvorrichtung ist somit eingeschränkt drehbar an drei Stellen mit dem Fahrwerksrahmen verbunden.
In vertikaler Richtung über den unteren Koppelbalken befinden sich die beiden oberen Koppelbalken. Das hintere freie Ende der oberen Koppelbalken ist über jeweils eine Verstellspindel mit den unteren Koppelbalken verbunden. Zudem sind die Kolbenstangen der beiden Aktoren mittels Gelenkachsen am mittleren Bereich der oberen Koppelbalken angelenkt. Die Zylinderkörper der beiden Aktoren sind wiederum mittels Gelenkachsen am Fahrwerksrahmen befestigt.

Wird nun die Kolbenseite der Aktoren mit Druck beaufschlagt längen sich die Aktoren, da die Kolbenstangen ausfahren, und es entsteht eine Schwenkbewegung der oberen Koppelbalken um ihre Gelenkachsenverbindung am Fahrwerksrahmen nach oben. Da die unteren Koppelbalken über die Verstellspindeln direkt mit den oberen Koppelbalken verbunden sind, schwenken auch die unteren Koppelbalken um ihre Gelenkachsenverbindung am Fahrwerksrahmen nach oben. So wird die Dreipunktkupplungsrichtung angehoben. Zum Absenken der Dreipunktkupplungsvorrichtung werden die Aktoren wieder eingefahren.

Nachteilig ist hierbei, dass ein kompliziert aufgebautes Koppelbalkensystem notwendig ist, um die aufrechten Aktoren zum Anheben und Absenken der Dreipunktkupplungsvorrichtung zu nutzen.
In der EP 1 021 943 A2 ist eine Verteilmaschine offenbart, deren Laufräder über Schwingen mittels eines Gelenks am Fahrwerksrahm in aufrechter Ebene bewegbar sind.

Die CN 203 537 775 U offenbart eine zweireihige Sämaschine, bei der die beiden Reihen über einen gemeinsamen Aktor aushebbar sind.
Der Erfindung liegt daher die Aufgabe zugrunde, eine grundsätzlich vereinfachte Anordnung eines Anhängesystems für ein gezogenes landwirtschaftliches Gerät zur schaffen.
Diese Aufgabe wird erfindungsgemäß durch die kennzeichnenden Merkmale des Anspruchs 1 gelöst.

Infolge dieser Maßnahme wird erreicht, dass der zumindest eine Aktor in günstiger Weise nicht mehr im gleichen Bauraum positioniert ist wie die Kupplungsvorrichtung. Die liegende Anordnung des zumindest einem Hydraulikzylinders begünstigt somit den Aufbau des Anhängesystems.

In einer vorteilhaften Ausführungsform der Erfindung wird die Kolbenbodenseite des zumindest einem Hydraulikzylinders mit Druck beaufschlagt, um die Kupplungsvorrichtung anzuheben und das landwirtschaftliche Gerät zumindest teilweise anzuheben. Durch Beaufschlagung der Kolbenbodenseite mit einem Druck entsteht eine größere Kraft, als bei Beaufschlagung der Kolbenringseite mit dem gleichen Druck aufgrund der Querschnittsverhältnisse. Zum Anheben der Kupplungsvorrichtung wird eine größere Kraft benötigt als zum Absenken. Da der Druck mit dem der zumindest eine Aktor versorgt wird vom Hydrauliksystem der Zugmaschine vorgegeben wird kann der zumindest eine Aktor durch die vorteilhafte Ausführungsform kleiner gestaltet werden, als in Ausführungsformen in denen die Kolbenringseite mit Druck beaufschlagt wird.
In einer weiteren vorteilhaften Ausführungsform der Erfindung umfasst die Kupplungsvorrichtung zumindest einen Hebelarm und zumindest zwei Schwingen, die mit einer Unterlenkeranbindung ausgerüstet sind, wobei der Hebelarm und die Schwingen drehfest um eine Gelenkachse gekoppelt sind. Diese Ausführungsform ist dazu ausgebildet, dass der zumindest eine Hydraulikzylinder den zumindest einen Hebelarm derart um den Drehpunkt verschwenkt, dass die zumindest zwei Schwingen angehoben und/oder abgesenkt werden. Vorteilhaft ist hierbei, dass durch die grundsätzlich vereinfachte Anordnung des Anhängesystems der Verfahrweg des zumindest einen Aktors auf einfach Weise in eine Hubbewegung der Kupplungsvorrichtung umgesetzt wird. In zweckmäßiger Weiterbildung dieser Ausführungsform umfasst die Kupplungsvorrichtung zusätzlich eine Oberlenkeranbindung und die Unterlenkeranbindung ist jeweils ein als Unterlenkerfanghaken an jeder Schwinge ausgebildet. Das so gestaltete Anhängesystem ist dazu eingerichtet landwirtschaftliche Geräte mit einer universellen Dreipunktaufhängung zu ziehen.

In erfindungsgemäßer Ausführungsform ist der zumindest eine Hydraulikzylinder mit Mitteln versehen, die dazu eingerichtet sind den Verfahrweg des zumindest einem Hydraulikzylinders zu begrenzen. In einer Weiterbildung sind die Mittel zur Begrenzung des Verfahrwegs als zumindest ein mechanischer Anschlag ausgebildet. Durch diese Ergänzung lässt sich die Position Hydraulikzylinders ohne elektronische Hilfsmittel begrenzen.
In einer weiteren vorteilhaften Weiterbildung der beschriebenen Ausführungsformen weist die Zugdeichsel eine derartige Länge auf, dass das Anhängesystem mit derart großem Abstand mit der Zugmaschine verbunden ist, dass die Zugmaschine uneingeschränkt lenken kann. So wird vermieden, dass die Zugmaschine bei enger Kurvenfahrt mit den Laufrädern oder sonstigen Komponenten des Anhängesystems in Kontakt kommt.
Weitere Einzelheiten der Erfindung sind der Beispielsbeschreibung und den Zeichnungen zu entnehmen. Die Zeichnungen zeigen
- Fig.1: ein Anhängesystem für ein gezogenes landwirtschaftliches Gerät in Grundstellung und in perspektivischer Ansicht,
- Fig.2: das Anhängesystem, gemäß Fig. 1, in Seitenansicht, wobei das linke Laufrad abgenommen ist,
- Fig.3: das Anhängesystem, wobei das linke Laufrad abgenommen ist, in ausgehobener Stellung in Seitenansicht.

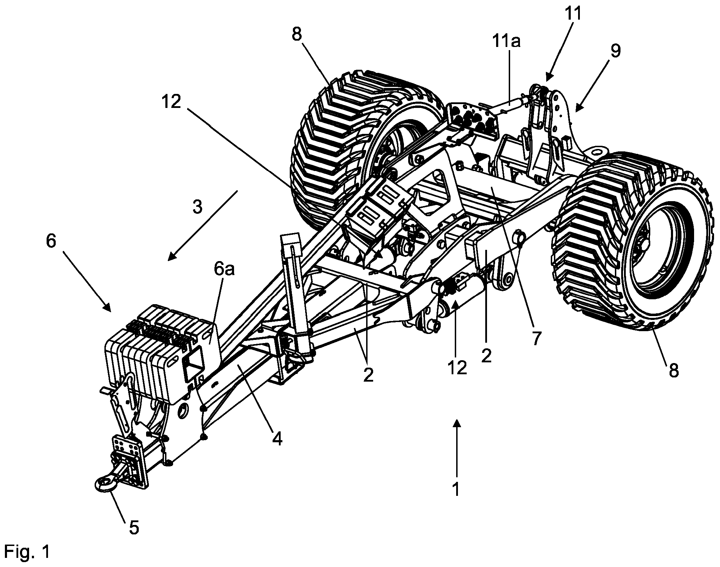

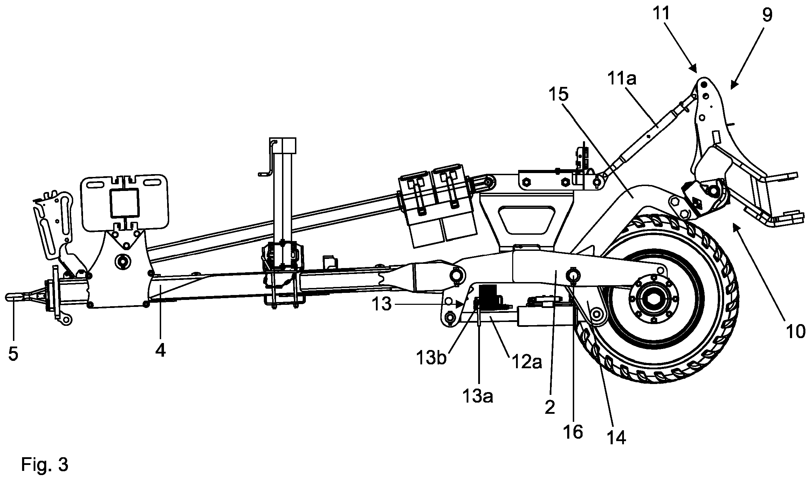

Das in Fig. 1 dargestellte Anhängesystem 1 befindet sich in Grundstellung und weist einen mehrteiligen zentralen Fahrwerksrahmen 2 auf. An dem Fahrwerksrahmen 2 ist eine sich in Fahrtrichtung 3 nach vorn erstreckende Zugdeichsel 4 mit einer Zugkupplung 5 angeordnet. Die Zugkupplung 5 ist dazu eingerichtet, das Anhängesystem 1 mit einer nicht dargestellten Zugmaschine zu verbinden, so dass sich das Anhängesystem 1 und die Zugmaschine zusammen in Fahrtrichtung 3 bewegen. Auf der Zugdeichsel 4, unmittelbar hinter der Zugkupplung 5, ist ein Ballasthalter 6 mit Zusatzgewichten 6a angeordnet, wodurch die mögliche Stützlast des Anhängesystems 1 erforderlichen Falls erhöht wird. Vorteilhafter Weise sind die Zusatzgewichte 6a weitest möglich entfernt von der Rückseite des Anhängesystems 1, insbesondere der dem Fahrwerksrahmen 2 zugeordneten Fahrwerksachse 7, angeordnet, wodurch die Stützlast aufgrund der dem Fachmann geläufigen Hebelwirkung weiter steigt.
Im hinteren Bereich des Anhängesystems 1 ist eine quer zur Fahrtrichtung 3 verlaufende Fahrwerksachse 7 am Fahrwerksrahmen 2 angeordnet. An beiden Enden der Fahrwerksachse 7 befindet sich ein drehbar gelagertes Laufrad 8. Über die Laufräder 8 stützt sich der Fahrwerksrahmen 2 auf dem Boden ab.
Um ein angehangenes landwirtschaftliches Gerät zumindest teilweise und eine Kupplungsvorrichtung 9 komplett anzuheben, sind zentral unter dem Fahrwerksrahmen 2 sind im Ausführungsbeispiel zwei als Hydraulikzylinder 12 ausgebildete Aktoren vorgesehen. Der jeweilige Hydraulikzylinder 12 ist liegend in einer Ebene angeordnet, die zumindest annährend parallel zum Boden liegt, und weist eine Kolbenstange 12a und eine Kolbenbodenseite 12b auf. Die Kolbenstange 12a ist jeweils an ihrem vorderen freien Ende mittels einer Gelenkachse 12c am Fahrwerksrahmen 2 festgelegt. Die Kolbenbodenseite 12b ist jeweils mittels einer Gelenkachse 12c mit einem Hebelarm 14 verbunden. In der dargestellten Ausführungsform ist der Hebelarm 14 links wie rechts mit einer Schwinge 15 einstückig und/oder drehfest ausgebildet. Die Hebelarme 14 und die Schwingen 15 sind mit Hilfe einer Drehlagerung 16 drehbar am Fahrwerksrahmen 2 beabstandet zueinander angeordnet. Am hinteren freien Ende der Schwingen 15 befindet sich eine Unterlenkeranbindung 10.
Werden nun die Kolbenbodenseiten 12b der Hydraulikzylinder 12 mit Druck beaufschlagt führt dies dazu, dass die Kolbenbodenseite 12b sich in Fahrtrichtung 3 relativ zum Fahrwerksrahmen 2 nach hinten verschiebt. Diese Relativbewegung führt rechts und links zu einer Schwenkbewegung der Hebelarme 14 und Schwingen 15 um die jeweilige Drehlagerung 16 nach oben. Durch diesen Vorgang wird die ausgehobene Stellung des Anhängesystems 1 erreicht, wie sie in Fig. 3 zu sehen ist. Die Kupplungsvorrichtung 9 wird komplett und ein angehangenes landwirtschaftliches Gerät zumindest teilweise angehoben, so dass das angehangene Gerät mit Hilfe eines ihm zugeordneten Stützrades ausgehoben werden und transportiert werden kann. Wird die Druckversorgung auf der Kolbenbodenseite 12b abgeschaltet, fahren die Hydraulikzylinder 12 durch die auf den Schwingen 15 lastende Stützlast wieder ein und die Schwingen 15 schwenken zurück um die Drehlagerung 16 und senken sich ab.
Um den Verfahrweg der Hydraulikzylinder 12, vorzugsweise beim Absenkvorgang, zu begrenzen, ist jeweils auf der Kolbenstange 12a eine Anschlagvorrichtung 13 angeordnet, welche mittels nicht dargestellten Befestigungsmitteln am Fahrwerksrahmen 2 festgelegt ist. Eine nicht verschiebbare Anschlagplatte 13a umgreift die Kolbenstange 12a und befindet sich in Grundstellung des Anhängesystems 1 in Anlage an den Zylinderkörper des jeweiligen Hydraulikzylinders 12. Durch den zuvor beschriebenen Anhebevorgang der Kupplungseinrichtung 9 wird der Teil der Kolbenstange 12a freigegeben über dem die Anschlagvorrichtung 13 angeordnet ist. Um den Verfahrweg der Hydraulikzylinder 12 zu begrenzen, können die Einschwenkerplatten 13b teilweise oder als Ganzes herabgeschwenkt werden, so dass sie die Kolbenstange 12a in nicht abgebildeter Weise teilweise umgreifen. Die, auf die Kolbenstange 12a geschwenkten, Einschwenkerplatten 13b bilden so einen mechanischen Anschlag, der verhindert dass der Zylinder komplett einfahren kann. Dem Anhängesystem 1 wird somit die Möglichkeit verliehen die Höhe der Kupplungsvorrichtung 9 bzw. der Schwingen 15 zu begrenzen und so ein angehangenes Gerät in seiner Tiefe zu führen
In Fahrtrichtung 3 ist unmittelbar hinter der Fahrwerksachse 7 eine Kupplungsvorrichtung 9 über die Schwingen 15 am Fahrwerksrahmen 2 angeordnet. Die Kupplungsvorrichtung 9 dient dazu das Anhängesystem 1 mit einem nicht dargestellten landwirtschaftlichen Gerät zu verbinden. Das landwirtschaftliche Gerät kann insbesondere ein Bodenbearbeitungsgerät, wie beispielsweise ein Pflug, oder eine Sämaschine sein. In ebenfalls vorteilhafter Weise ist die Distanz in Fahrtrichtung 3 zwischen der Kupplungsvorrichtung 9 und der Fahrwerksachse 7 sehr gering. Dies wirkt sich aufgrund der Hebelwirkung positiv auf die aufzunehmende Stützlast aus.

Da oben genannte landwirtschaftliche Geräte über unterschiedliche Aufhängungen zur Kopplung mit einer Zugmaschine oder einer erfindungsgemäßen Ausführungsform des Anhängesystems 1 verfügen, sind unterschiedliche Ausbildungen der Kupplungsvorrichtung 9 denkbar.

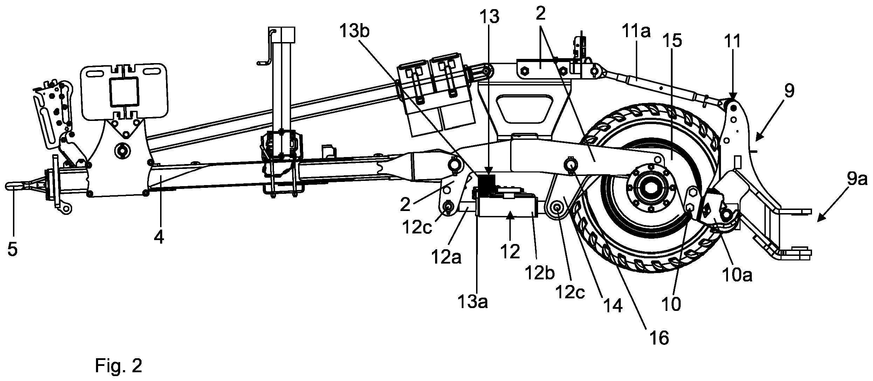

Die Kupplungsvorrichtung 9 ist über die Unterlenkeranbindung 10 an den Schwingen 15 und eine Oberlenkeranbindung 11 mit dem Fahrwerksrahmen 2 verbunden. Die Unterlenkeranbindung 10 ist in dieser Ausführungsform als Unterlenkerfanghaken 10a an den beiden Schwingen 15 ausgebildet, so dass die Kupplungsvorrichtung 9 an zwei Stellen einfach angehangen wird. Ebenso denkbar als Unterlenkeranbindung 10 ist eine Unterlenkertraverse. Die Oberlenkeranbindung 11 ist ausgebildet als einfacher Oberlenker 11a. Der Oberlenker 11a verbindet den Fahrwerksrahmen 2 und das obere Ende der Kupplungsvorrichtung 9 und fixiert diese so in axialer Richtung. In den Fig. 1 - 3 ist eine Ausführungsform der Kupplungsvorrichtung 9 gezeigt, die zur Kopplung mit einem landwirtschaftlichen Gerät, welches ebenfalls über eine einfache Zugkupplung verfügt, eingerichtet ist. Die dargestellte Kupplungsvorrichtung 9 verfügt hierzu über ein Zugmaul 9a, wie in Fig. 2 gezeigt ist. In nicht dargestellter Weise wird in das Zugmaul 9a eine Zugkupplung des landwirtschaftlichen Gerätes einführt und über einen ebenfalls nicht dargestellten Bolzen gesichert.
Eine nicht dargestellte Ausführungsform der Erfindung sieht vor, dass die Kupplungsvorrichtung 9 lediglich durch die Unterlenkerfanghaken 10a an den beabstandeten Schwingen 15 und den Oberlenker 11a gebildet wird. In dieser Ausführungsform kann ein landwirtschaftliches Gerät mit Dreipunktaufhängung direkt mit dem Anhängesystem 1 verbunden werden. Hierzu sind die Unterlenkerbolzen des gezogenen Geräts in den Unterlenkerfanghaken 10a fixiert und der Oberlenker 11a ebenfalls verbunden. Ebenso denkbar ist, dass als Unterlenkeranbindung 10 lediglich eine nicht abgebildete Unterlenkertraverse genutzt wird, so dass der Oberlenker 11a zusätzlich entfallen kann.
Eine nicht dargestellte Ausführungsform der Erfindung sieht vor, dass die Zugdeichsel 4 in einer Länge ausgeführt wird, die das Anhängesystem 1 mit derart großem Abstand führt, dass eine nicht dargestellte Zugmaschine uneingeschränkt lenken kann. Dies ist besonders dann von Vorteil wenn die Zugmaschine als Knicklenker oder Raupenschlepper ausgebildet ist.

### Bezugszeichenliste

- 1: Anhängesystem
- 2: Fahrwerksrahmen
- 3: Fahrtrichtung
- 4: Zugdeichsel
- 5: Zugkupplung
- 6: Ballasthalter
- 6a: Zusatzgewicht
- 7: Fahrwerksachse
- 8: Laufrad
- 9: Kupplungsvorrichtung
- 9a: Zugmaul
- 10: Unterlenkeranbindung
- 10a: Unterlenkerfanghaken
- 11: Oberlenkeranbindung
- 11a: Oberlenker
- 12: Hydraulikzylinder
- 12a: Kolbenstange
- 12b: Kolbenbodenseite
- 12c: Gelenkachse
- 13: Anschlagvorrichtung
- 13a: Anschlagplatte
- 13b: Einschwenkerplatte
- 14: Hebelarm
- 15: Schwinge
- 16: Drehlagerung

## Patentansprüche

1. Anhängesystem (1) für ein gezogenes landwirtschaftliches Gerät, insbesondere für ein Bodenbearbeitungsgerät und/oder eine Sämaschine, mit einem Fahrwerksrahmen (2) mit sich auf dem Boden abstützenden Laufrädern (8),
a. wobei an dem Fahrwerksrahmen (2) vorzugsweise auf dessen Rückseite eine Kupplungsvorrichtung (9) vorgesehen ist, um das landwirtschaftliche Gerät anzuhängen,
b. wobei der Fahrwerksrahmen (2) mit zumindest einem als Hydraulikzylinder (12) ausgebildeten Aktor versehen ist, um die Kupplungsvorrichtung (9) anzuheben und das landwirtschaftliche Gerät zumindest teilweise anzuheben,
c. wobei der Fahrwerksrahmen (2) mit einer Zugdeichsel (4) mit Zugkupplung zur Verbindung mit einer Zugmaschine versehen ist,
wobei der zumindest eine Aktor in einer Ebene angeordnet ist, die zumindest annährend parallel zum Boden liegt, **dadurch gekennzeichnet, dass** der zumindest eine Hydraulikzylinder (12) mit Mitteln (13) versehen ist, die dazu eingerichtet sind den Verfahrweg des zumindest einem Hydraulikzylinders (12) zu begrenzen.

2. Anhängesystem für ein gezogenes landwirtschaftliches Gerät nach Anspruch 1, **dadurch gekennzeichnet, dass** die Kolbenbodenseite (12b) des zumindest einem Hydraulikzylinders (12) mit Druck beaufschlagt wird, um die Kupplungsvorrichtung (9) anzuheben und das landwirtschaftliche Gerät zumindest teilweise anzuheben.

3. Anhängesystem für ein gezogenes landwirtschaftliches Gerät nach zumindest einem der vorstehenden Ansprüche, **dadurch gekennzeichnet, dass** die Kupplungsvorrichtung (9) zumindest einen Hebelarm (14) und zumindest zwei Schwingen (15), die mit einer Unterlenkeranbindung (10) ausgerüstet sind, umfasst wobei der Hebelarm (14) und die Schwingen (15) drehfest um eine Gelenkachse gekoppelt sind.

4. Anhängesystem für ein gezogenes landwirtschaftliches Gerät nach Anspruch 3, **dadurch gekennzeichnet, dass** der zumindest eine Hydraulikzylinder (12) den zumindest einen Hebelarm (14) derart um den Drehpunkt verschwenkt, dass die zumindest zwei Schwingen (15) angehoben und/oder abgesenkt werden.

5. Anhängesystem für ein gezogenes landwirtschaftliches Gerät nach Anspruch 3, **dadurch gekennzeichnet, dass** die Kupplungsvorrichtung (9) zusätzlich eine Oberlenkeranbindung (11) umfasst und die Unterlenkeranbindung (10) als jeweils ein Unterlenkerfanghaken (10a) an jeder Schwinge (15) ausgebildet ist.

6. Anhängesystem für ein gezogenes landwirtschaftliches Gerät nach Anspruch 1, **dadurch gekennzeichnet, dass** die Mittel (13) zur Begrenzung des Verfahrwegs als zumindest ein mechanischer Anschlag ausgebildet sind.

7. Anhängesystem für ein gezogenes landwirtschaftliches Gerät nach Anspruch 1, **dadurch gekennzeichnet, dass** die Mittel (13) zur Begrenzung des Verfahrweges mittels Befestigungsmitteln am Fahrwerksrahmen (2) festgelegt sind.

## Claims

1. Hitching system (1) for a towed agricultural device, in particular for a soil cultivation device and/or a seed drill, having a chassis frame (2) with running wheels (8) supported on the ground,
a. wherein a coupling device (9) is provided on the chassis frame (2), preferably on the rear side thereof, in order to hitch the agricultural device,
b. wherein the chassis frame (2) is provided with at least one actuator in the form of a hydraulic cylinder (12), in order to raise the coupling device (9) and to at least partially raise the agricultural device,
c. wherein the chassis frame (2) is provided with a drawbar (4) with a trailer coupling for connecting to a tractor,
wherein the at least one actuator is arranged in a plane that is approximately parallel to the ground, **characterized in that** the at least one hydraulic actuator (12) is provided with means (13) that are set up to limit the travel of the at least one hydraulic cylinder (12).

2. Hitching system for a towed agricultural device according to Claim 1, **characterized in that** pressure is applied to the piston face (12b) of the at least one hydraulic cylinder (12) in order to raise the coupling device (9) and to at least partially raise the agricultural device.

3. Hitching system for a towed agricultural device according to at least one of the preceding claims, **characterized in that** the coupling device (9) comprises at least one lever arm (14) and at least two swing arms (15) that are equipped with a lower link attachment (10), wherein the lever arm (14) and the swing arms (15) are coupled for conjoint rotation about a joint axis.

4. Hitching system for a towed agricultural device according to Claim 3, **characterized in that** the at least one hydraulic cylinder (12) pivots the at least one lever arm (14) about the pivot point such that the at least two swing arms (15) are raised and/or lowered.

5. Hitching system for a towed agricultural device according to Claim 3, **characterized in that** the coupling device (9) additionally comprises an upper link attachment (11) and the lower link attachment (10) is configured in each case as a lower link arrestor hook (10a) on each swing arm (15).

6. Hitching system for a towed agricultural device according to Claim 1, **characterized in that** the means (13) for limiting the travel are in the form of at least one mechanical stop.

7. Hitching system for a towed agricultural device according to Claim 1, **characterized in that** the means (13) for limiting the travel are fixed to the chassis frame (2) by means of fastening means.

## Revendications

1. Système d'attelage (1) pour un engin agricole tracté, en particulier pour un engin de travail du sol et/ou un semoir, comprenant un cadre de châssis (2) avec des roues de roulement (8) s'appuyant au sol,
a. un dispositif d'accouplement (9) étant de préférence prévu sur le cadre de châssis (2), de préférence sur son côté arrière afin d'atteler l'engin agricole,
b. le cadre de châssis (2) étant pourvu d'au moins un actionneur réalisé en tant que vérin hydraulique (12) afin de soulever le dispositif d'accouplement (9) et de soulever l'engin agricole au moins en partie,
c. le cadre de châssis (2) étant pourvu d'un timon d'attelage (4) avec un accouplement de traction pour le raccordement à un tracteur,
l'au moins un actionneur étant disposé dans un plan situé au moins approximativement parallèlement au sol, **caractérisé en ce que** l'au moins un vérin hydraulique (12) est pourvu de moyens (13) qui sont prévus pour limiter la course de déplacement de l'au moins un vérin hydraulique (12) .

2. Système d'attelage pour un engin agricole tracté selon la revendication 1, **caractérisé en ce que** le côté sol du piston (12b) de l'au moins un vérin hydraulique (12) est sollicité en pression afin de soulever le dispositif d'accouplement (9) et de soulever au moins en partie l'engin agricole.

3. Système d'attelage pour un engin agricole tracté selon au moins l'une des revendications précédentes, **caractérisé en ce que** le dispositif d'accouplement (9) comprend au moins un bras de levier (14) et au moins deux bielles oscillantes (15) qui sont équipées d'une liaison à bras d'attelage inférieur (10), le bras de levier (14) et les bielles oscillantes (15) étant accouplés de manière solidaire en rotation autour d'un axe d'articulation.

4. Système d'attelage pour un engin agricole tracté selon la revendication 3, **caractérisé en ce que** l'au moins un vérin hydraulique (12) fait pivoter l'au moins un bras de levier (14) autour d'un point de pivot de telle sorte que les au moins deux bielles oscillantes (15) soient soulevées et/ou abaissées.

5. Système d'attelage pour un engin agricole tracté selon la revendication 3, **caractérisé en ce que** le dispositif d'accouplement (9) comprend en outre une liaison à bras d'attelage supérieur (11) et la liaison à bras d'attelage inférieur (10) est réalisée à chaque fois sous forme de crochet d'accrochage de bras d'attelage inférieur (10a) au niveau de chaque bielle oscillante (15).

6. Système d'attelage pour un engin agricole tracté selon la revendication 1, **caractérisé en ce que** les moyens (13) pour limiter la course de déplacement sont réalisés sous forme d'au moins une butée mécanique.

7. Système d'attelage pour un engin agricole tracté selon la revendication 1, **caractérisé en ce que** les moyens (13) pour limiter la course de déplacement sont fixés le biais de moyens de fixation au cadre de châssis (2).
